(19) **Europäisches Patentamt**

**European Patent Office**

**Office européen des brevets**

(11) **EP 1 001 360 A1**

(12) **DEMANDE DE BREVET EUROPEEN**

(43) Date de publication:
**17.05.2000 Bulletin 2000/20**

(51) Int. Cl.⁷: **G06K 7/00**

(21) Numéro de dépôt: **99402699.5**

(22) Date de dépôt: **29.10.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **10.11.1998 FR 9814136**

(71) Demandeur: **STMicroelectronics SA**
**94250 Gentilly Cedex (FR)**

(72) Inventeur: **Gaultier, Jean-Marie**
**75116 Paris (FR)**

(74) Mandataire:
**Ballot, Paul Denis Jacques**
**Cabinet Ballot-Schmit,**
**7, rue Le Sueur**
**75116 Paris (FR)**

(54) **Procédé de gestion d'un circuit électronique**

(57) La présente invention concerne un procédé de gestion d'un circuit électronique, notamment une mémoire de carte à puce, dans lequel une même commande (100) transmise par une unité de gestion est interprétée par le circuit électronique d'une première manière si elle est suivie d'un temps mort (T0) de durée déterminée ou d'une seconde manière, différente de la première, si une nouvelle commande (101) est transmise avant l'expiration de ce temps mort (T0).

Application à la gestion de la mémoire d'une carte à puce, notamment une carte téléphonique.

FIG_5a 100 101

FIG_5b SYNC

T0 T1 201

EP 1 001 360 A1

**Description**

La présente invention se rapporte à un procédé de gestion d'un circuit électronique, notamment une mémoire de carte à puce.

En particulier, l'invention s'applique à des cartes à puce sans contact, comme des cartes bancaires, des cartes téléphoniques, ou autres. La gestion de telles cartes s'effectue à distance, par l'intermédiaire d'une onde électromagnétique, en général dans le domaine radiofréquence.

A cet effet, une unité de gestion comporte une antenne et des moyens pour générer, moduler et émettre une onde de ce type, afin de transmettre des données vers une antenne de la carte. L'onde est en général suffisamment puissante pour pouvoir télé-alimenter les circuits logiques de la carte. La carte comporte des moyens pour transformer l'énergie électromagnétique reçue sur son antenne, d'une part en une tension d'alimentation régulée, et d'autre part en données binaires exploitables par les circuits logiques. En réponse, des données peuvent alors être transmises par la carte vers l'unité de gestion par le principe de modulation de charge. Cette modulation consiste en la variation de la consommation de courant sur l'antenne de la carte. Cette variation crée une perturbation qui induit une variation de tension détectable sur l'antenne de l'unité de gestion. L'unité de gestion comporte des moyens pour traiter et remettre en forme cette variation de tension afin d'obtenir les données transmises par la carte.

Les cartes téléphoniques actuellement mises en circulation dans la plupart des pays sont des cartes avec contacts. Leur gestion s'effectue par l'intermédiaire de pastilles métalliques avec lesquelles des bornes de l'unité de gestion (ou lecteur) entrent en contact électrique.

Depuis quelque temps, on cherche à remplacer les cartes téléphoniques actuelles et les lecteurs qui leur sont associés par des produits équivalents supportant une gestion de type sans contact, sans pour autant modifier la structure des circuits logiques des cartes actuelles ni leur fonctionnement intime. En effet, d'un coté on souhaite s'affranchir des problèmes inhérents à la transmission par contacts (erreurs de positionnement des bornes du lecteur par rapport aux pastilles de la carte, usure ou oxydation des bornes et/ou des pastilles, échauffement, etc...). Mais d'un autre côté on ne souhaite pas remettre en question le consensus technologique auquel sont arrivés les différents acteurs (fabricants de cartes, fabricants de lecteurs, opérateurs de téléphonie, etc...) en ce qui concerne les cartes elles-mêmes.

En réalité, la problématique se résume à la mise en oeuvre de méthodes connues de transmission de données par onde électromagnétique pour réaliser l'interface sans contact entre les lecteurs et les cartes de type connu.

Or, les méthodes de transmission de données par onde électromagnétique sont conformes aux spécifications de normes, telles que la norme 《ISO 14443-2 type B》 en vigueur en France, qui définissent notamment la fréquence, le niveau de puissance, le type de codage, et la dynamique des émissions électromagnétiques sur le canal de transmission.

De plus, les cartes téléphoniques actuelles n'admettent qu'un très petit nombre de commandes, dont certaines au moins s'accommodent mal d'une gestion à distance conforme aux spécifications de la norme précitée.

Par exemple, une commande de lecture dans la mémoire d'une carte téléphonique provoque l'exécution de deux fonctions de commandes distinctes : d'une part, l'incrémentation d'un compteur d'adresse de la carte ; et, d'autre part, la lecture de la donnée mémorisée dans la mémoire de la carte à l'adresse indiquée par la valeur courante du compteur, ainsi que sa transmission vers le lecteur. Ainsi, pour lire la donnée mémorisée à l'adresse n+m, où n et m sont des nombres entiers et où n désigne la valeur courante du compteur d'adresse, il faut exécuter une séquence de m commandes de lecture successives. Cette séquence implique la transmission, en alternance, de m mots de commande du lecteur vers la carte et de m mots de donnée de la carte vers le lecteur.

Or, en raison du principe de transmission des cartes sans contact tel que rappelé en introduction, la norme 《ISO 14443-2 type B》 impose d'attendre un certain temps entre chacune de ces transmissions, pour permettre à l'unité de gestion de passer du mode d'émission au mode de réception et réciproquement (on parle de 《retournement》 de l'antenne de l'unité de gestion). Ces temps morts ou temps de silence (pendant lesquels aucune donnée n'est émise ni dans un sens ni dans l'autre) sont de l'ordre de 150 µs (microsecondes). On comprend que l'exécution d'une commande de lecture du type décrit ci-dessus dans le respect des spécifications de la norme 《ISO 14443-2 type B》 peut conduire à une valeur moyenne du temps d'accès très importante, et en tout cas peu compatible avec les contraintes de rapidité liées à l'application.

Une solution serait bien entendu d'augmenter le nombre de commandes admises par les cartes, par exemple en prévoyant deux commandes bien distinctes, d'une part pour la fonction d'incrémentation du compteur d'adresse et, d'autre part pour la fonction de lecture et de transmission de la donnée. Pour lire la donnée mémorisée à l'adresse n+m, il faudrait transmettre m fois la première commande, et une seule fois la seconde. Seule la seconde commande nécessitant un retournement de l'antenne de l'unité de gestion, et donc le respect d'un temps mort, la valeur moyenne du temps d'accès à la mémoire serait réduite. Mais, augmenter ainsi le nombre de commandes ne pourrait se faire sans modifier en profondeur la structure des circuits logiques des cartes téléphoniques. De plus, augmenter le nombre de commandes distinctes nécessite d'augmenter la taille des mots binaires qui codent la commande (mots de commande). De manière générale, un problème se pose dans toute application où le nombre de commandes distinctes est limité.

Le but de l'invention est de résoudre les problèmes précités de la gestion d'un circuit électronique quelconque, tels qu'ils se posent, par exemple, dans l'application et dans le contexte exposés ci-dessus.

A cet effet, l'invention propose un procédé de gestion d'un circuit électronique, notamment une mémoire de carte à puce, dans lequel une même commande transmise par une unité de gestion est interprétée par le circuit électronique d'une première manière dans le cas où (premier cas) elle est suivie d'un temps mort de durée déterminée, ou d'une seconde manière, différente de la première, dans le cas où (second cas) une nouvelle commande est transmise avant l'expiration de ce temps mort.

Par l'expression ⟨⟨temps mort⟩⟩, on désigne une période de temps au cours de laquelle aucune donnée n'est transmise, ni par l'unité de gestion, ni par le circuit électronique, sur le canal de transmission qui sépare l'une de l'autre.

Par l'expression ⟨⟨nouvelle commande⟩⟩, on entend dans le cas général une commande transmise à la suite de ladite commande déterminée, qui peut être identique à ladite commande déterminée, ou différente.

Par ailleurs, dire qu'une commande est interprétée d'une manière ou d'une autre revient à dire qu'elle provoque la mise en oeuvre de telle ou telle fonction de commande dans le circuit électronique.

Ainsi, grâce au procédé de l'invention, on peut augmenter le nombre de fonctions de commande sans augmenter le nombre de commandes.

De plus, dans une application où l'exécution d'une commande interprétée de la première manière possible (par exemple pour le retournement de l'antenne) nécessite un temps mort après sa transmission, mais où l'exécution de cette même commande interprétée de la seconde manière ne nécessite pas un tel temps mort, le fait d'interpréter cette commande de la seconde manière si une nouvelle commande est transmise pendant ce temps mort, permet de gagner du temps pour son exécution dans ce deuxième cas. Dit autrement, un temps mort remplit deux fonctions. D'une part il provoque l'interprétation de la commande de la première manière possible, et d'autre part il permet le retournement de l'antenne de l'unité de gestion nécessaire à l'exécution de la commande ainsi interprétée.

Il est bien évident que le procédé selon l'invention peut s'appliquer à la gestion d'un circuit électronique quelconque, et pas seulement une mémoire de carte à puce. En outre, la gestion peut être de type quelconque, notamment avec ou sans contact. Le canal de transmission qui sépare le circuit électronique et l'unité de gestion peut être de n'importe quelle nature.

Dans un mode de réalisation préféré, ladite commande déterminée est interprétée de ladite seconde manière uniquement si ladite nouvelle commande est valablement reçue avant l'expiration du temps mort.

Par l'expression ⟨⟨valablement reçue⟩⟩, on désigne la réception correcte d'une commande conformément au protocole de communication entre l'unité de gestion et le circuit. Notamment, si les messages transmis comportent un ou plusieurs bits de contrôle, une commande sera considérée comme valablement reçue si les bits de contrôle extraits du message indiquent que la transmission est correcte. On limite ainsi les erreurs d'interprétation dues aux perturbations sur le canal de transmission.

D'autres caractéristiques et avantages de l'invention apparaîtront plus clairement à la lecture de la description détaillée qui va suivre. Celle-ci est purement illustrative et doit être lue en regard des dessins annexés, sur lesquels on a représenté :

-    à la figure 1 : le schéma d'un système pour la mise en oeuvre du procédé selon l'invention ;
-    à la figure 2 : le schéma d'un mot de commande transmis par l'unité de gestion ;
-    à la figure 3 : le schéma d'un mot de donnée transmis par le circuit électronique ;
-    aux figures 4a et 4b : des chronogrammes de mots binaires ou autres, transmis respectivement par l'unité de gestion et la carte dans le cas où le temps mort est respecté ;
-    aux figures 5a et 5b : des chronogrammes de mots binaires ou autres, transmis respectivement par l'unité de gestion et la carte dans le cas où le temps mort n'est pas respecté.

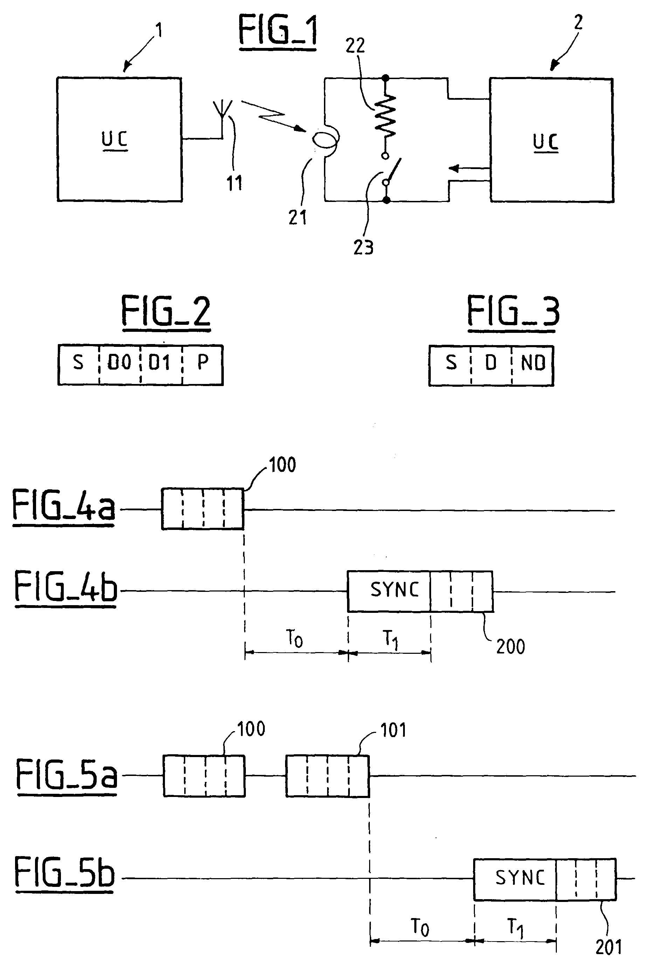

A la figure 1, on a représenté une unité de gestion 1 comportant une unité de commande UC couplée à une antenne 11. Cette unité de commande comprend les moyens nécessaires à la réalisation de la fonction de l'unité de gestion dans l'application envisagée, ainsi que des moyens pour réaliser l'interface électromagnétique avec un circuit électronique 2.

Dans la suite, on considère l'exemple d'une application de l'invention à un appareil téléphonique. Le circuit électronique 2 est par exemple une carte téléphonique (carte à puce) et l'unité de gestion 1 est un dispositif de lecture/écriture, appelé lecteur dans la suite, qui permet la lecture mais aussi l'écriture dans une mémoire de la carte 2.

Pour réaliser l'interface électromagnétique avec la carte 2, selon par exemple les spécifications de la norme ⟨⟨ISO 14443-2 type B⟩⟩, le lecteur comprend des moyens pour générer une onde électromagnétique sinusoïdale modulée, dont la porteuse a une fréquence fcc de 13,56 Mhz (mégahertzs). Cette onde électromagnétique est assez puissante pour télé-alimenter les circuits logiques de la carte 2, à une distance de 10 cm (centimètres) environ. Une telle énergie de télé-alimentation est de l'ordre de 1,5 A/m (Ampères par mètre).

L'onde porteuse est modulée selon une modulation de type ASK (de l'anglais 〈〈Amplitude Shift Keying〉〉), c'est-à-dire une modulation d'amplitude. La profondeur de modulation est au moins égale à 10%. Cette modulation permet la transmission de mots de commande du lecteur 1 vers la carte 2.

La carte 2 comporte une antenne 21 couplée à une unité de commande UC comprenant les moyens nécessaires à la réalisation de la fonction de la carte dans l'application, notamment une mémoire. Elle comprend aussi des moyens pour réaliser l'interface électromagnétique avec le lecteur 1. Ces derniers moyens comprennent des moyens pour transformer l'énergie électromagnétique reçue sur l'antenne 21 en une tension d'alimentation régulée à 3V (volts) pour l'alimentation des circuits logiques de la carte 2. En outre, ils comprennent des moyens de démodulation et de décodage pour récupérer les bits de messages de commande transmis par le lecteur 1. Ils comprennent enfin une impédance 22 en série avec un interrupteur commandé 23. L'impédance 22 peut être connectée ou non en parallèle sur l'antenne 21 pour faire varier la charge de celle-ci selon l'état ouvert ou fermé de l'interrupteur (une connexion en série est également possible). L'état de l'interrupteur 23 est commandé par l'unité de commande UC de la carte 2 de manière à transmettre des mots de donnée de la carte 2 vers le lecteur 1 (notamment les données lues dans la mémoire de la carte) par le principe de modulation de charge décrit en introduction. Pour améliorer cette transmission, les données sont codées selon un codage BPSK (de l'anglais 〈〈Binary Phase Shift Keying〉〉) c'est à dire par modulation de phase à deux états. Ce codage utilise une sous porteuse à une fréquence $f_s$ qui, d'après la norme 〈〈ISO 14443-2 type B〉〉 vaut $f_{cc}/16$ c'est-à-dire 847 kHz (Kilohertz). A chaque transition des données à émettre, le signal à la fréquence $f_s$, qui commande l'interrupteur 23, subit un saut de phase de 180°.

La transmission des informations dans le sens lecteur vers carte ou carte vers lecteur se fait à une vitesse de 106 Kbits/s (kilobits par seconde). La durée d'émission d'un bit est donc de 1/106 kHz.

A la figure 2, on a représenté un mot de commande transmis du lecteur vers la carte. Il s'agit d'un mot de 4 bits.

Le premier bit, ou bit S, est un bit de service utilisé pour synchroniser le transfert de données. On l'appelle classiquement bit de démarrage. Il a par exemple la valeur binaire 0.

Les deux bits suivants, les bits D0 et D1, sont des bits de données utiles qui codent la commande transmise. On les appelle classiquement bits de commande. Avec deux bits de commande, il n'est possible d'avoir que, au plus, quatre commandes distinctes. Pour les cartes téléphoniques actuelles, on n'utilise en réalité que trois commandes distinctes :

- la première est une commande dite de lecture ; elle réalise une fonction d'incrémentation du compteur d'adresse précité, et de lecture de la donnée mémorisée dans la mémoire de la carte à l'adresse correspondant à la valeur courante du compteur d'adresse (après incrémentation ), cette donnée étant alors transmise vers le lecteur ;
- la deuxième est une commande dite d'initialisation ; elle réalise une fonction d'initialisation (dite aussi de remise à zéro (RAZ)) d'un compteur d'adresse de la carte, et de la lecture de la donnée mémorisée dans la mémoire de la carte à l'adresse correspondant à la valeur courante du compteur d'adresse (après initialisation), c'est-à-dire à l'adresse nulle, cette donnée étant alors transmise vers le lecteur ;
- la troisième est une commande dite de programmation ; elle réalise une fonction de programmation de la cellule de la mémoire de la carte située à l'adresse correspondant à la valeur courante du compteur d'adresse (sous réserve que cette cellule se trouve dans une zone de la mémoire accessible en écriture).

Enfin, le mot de commande de la figure 2 se termine par un quatrième bit, ou bit P, qui est un bit de service utilisé par la carte pour contrôler la validité des données reçues. Classiquement, on l'appelle bit de contrôle. Dans les cartes téléphoniques actuelles, le contrôle est un contrôle de parité. La valeur du bit P est ainsi déterminée par le produit de la fonction OU-Exclusif (XOR) appliquée aux bits DO et D1.

A la figure 3, on a représenté un mot de donnée transmis de la carte vers le lecteur. I1 s'agit d'un mot de trois bits, dont le premier, ou bit S, est identique et remplit la même fonction que le bit S du mot de commande décrit ci-dessus en regard de la figure 2.

Le second bit, ou bit D, est le bit de donnée lu dans la mémoire de la carte à la suite de la réception de la première ou de la deuxième commande décrite cidessus. Enfin le troisième bit, ou bit ND, est le complémentaire binaire du bit D. Ainsi, le bit d'information lu dans la mémoire est transmis deux fois dans le même mot, dont une fois complémenté. Ceci implique deux transitions, et donc deux sauts de phase du signal de la sous-porteuse à la fréquence $f_s$. La détection par le lecteur est ainsi améliorée.

On va maintenant décrire le déroulement du procédé selon l'invention dans deux cas différents, respectivement en regard des figures 4a et 4b d'une part, et des figures 5a et 5b d'autre part. Pour chaque cas, on supposera que, au démarrage, le compteur d'adresse de la carte a la valeur n, où n est un entier.

Dans le premier cas (figure 4a), le lecteur transmet un mot de commande 100, pour transmettre une commande C déterminée, par exemple une commande de lecture. Et, il n'émet ensuite aucune autre commande pendant un temps T0, appelé temps mort ou temps de silence.

Le temps mort T0 a pour fonction de permettre au lecteur de passer du mode émission en mode réception. En effet, ce temps est mis à profit par le lecteur pour désactiver les moyens de modulation de l'onde porteuse à la fréquence fcc et, au contraire, activer des moyens de détection des variations de la tension sur l'antenne 11 du lecteur. Dans le jargon de l'homme du métier, cette opération est appelée «retournement de l'antenne». En effet, on conçoit que l'antenne 11, sur laquelle l'onde électromagnétique à la fréquence fcc est émise en permanence, passe d'un rôle d'émission d'informations par modulation d'amplitude à un rôle de détection d'informations émises par la carte par modulation de la charge de l'antenne 21. Selon les spécifications de la norme, le temps mort T0 est égal à 120/fs, c'est-à-dire 141 μs (microsecondes).

Les circuits logiques de la carte incrémentent le compteur d'adresse d'une unité (en sorte que sa valeur passe à n+1). Puis ils provoquent la lecture de la donnée mémorisée à l'adresse n+1 de la mémoire de la carte. Enfin, et à l'expiration du temps mort TO faisant suite à la réception de la commande 100, ils provoquent l'émission d'un mot de donnée 200 (figure 4b). A cet effet, la charge de l'antenne 21 est modulée à la fréquence fs pendant une durée T1 après l'expiration du temps T0, ce qui permet la synchronisation du lecteur avec la carte. Après le temps T1, un premier saut de phase généré sur le signal modulant la charge de l'antenne 21 constitue le bit de démarrage S du mot de donnée 200 qui est alors transmis.

Le procédé selon l'invention propose en outre une autre interprétation de la même commande C émise par le lecteur, dans le cas où le temps mort T0 n'est pas respecté après sa réception, c'est-à-dire lorsqu'une nouvelle commande est reçue par la carte avant l'expiration de ce temps mort T0.

Dans ce second cas (figure 5a), le lecteur transmet le mot de commande 100 et, avant qu'il ne se soit écoulé un temps égal à T0, il émet un nouveau mot de commande 101. Le mot 101 peut transmettre la même commande C que le mot 100, ou une autre commande. Ce n'est pas la nature de la commande transmise par le second mot 101 qui influence l'interprétation de la commande C transmise par le premier mot 100, mais c'est la durée qui sépare la transmission des deux mots 100 et 101.

La commande C transmise par le mot 100 provoque uniquement l'incrémentation du compteur d'adresse d'une unité (en sorte que sa valeur passe à n+1). Elle ne provoque pas, comme dans le premier cas ci-dessus, la lecture puis la transmission de la donnée mémorisée à l'adresse n+1 de la mémoire de la carte.

Si l'on suppose que la commande transmise avec le mot 101 est la commande C transmise avec le mot 100, et si le mot 101 est suivi d'un temps mort T0, alors (figure 5b), le mot 201 est transmis de la même manière que le mot 200 du premier cas ci-dessus.

Néanmoins, comme on l'aura compris, la donnée transmise par le mot 201 est la donnée mémorisée à l'adresse n+2 de la mémoire de la carte. En effet, la commande C transmise avec le mot de commande 101 aura été interprétée de la même manière que dans le premier cas ci-dessus et aura donc provoqué une nouvelle incrémentation du compteur d'adresse de la carte (en sorte qu'il sera passé à n+2).

Ainsi, selon l'invention, la même commande C est interprétée d'une manière ou d'une autre en fonction de ce qui se passe pendant le temps T0 faisant suite à sa transmission.

On notera que, avec les deux fonctions de commande attribuées à la commande C (commande de lecture) décrite ci-dessus, l'invention permet de gagner du temps pour la lecture de la donnée mémorisée à l'adresse n+m de la mémoire de la carte. En effet, seule la donnée mémorisée à l'adresse n+m est transmise par la carte. Et les m-1 mots de commande transmis consécutivement pour amener le compteur d'adresse de la carte à la valeur n=m=1 ne sont pas espacées deux à deux dans le temps de la durée T0. Cette séquence de mots de commande, dont le rôle est simplement d'amener le compteur d'adresse à la pénultième valeur avant la valeur souhaitée, est donc transmise rapidement.

Le principe de l'invention s'applique naturellement à toute commande, et pas seulement à une commande de lecture telle qu'envisagée ci-dessus.

Par exemple la deuxième commande pour carte téléphonique présenté ci-dessus (commande dite d'initialisation) peut être interprétée d'une première manière en sorte de remplir, dans le cas où le temps mort est respecté, les fonctions précitées d'initialisation du compteur d'adresse de la carte, de lecture de la donnée mémorisée dans la mémoire de la carte à l'adresse nulle et de transmission de cette donnée vers le lecteur. Et elle peut être interprétée d'une seconde manière, selon l'invention, en sorte de ne remplir que la fonction d'initialisation du compteur d'adresse lorsque le temps mort n'est pas respecté.

On a dit plus haut qu'une commande déterminée est interprétée de la seconde manière selon l'invention lorsqu'une nouvelle commande, quelle qu'elle soit est transmise par l'unité de gestion avant l'expiration du temps mort T0 après la transmission de cette commande déterminée. Néanmoins, dans un mode de mise en oeuvre particulier, on peut aussi prévoir qu'elle ne sera interprétée de cette seconde manière que si elle (c'est-à-dire la même commande) est à nouveau transmise (c'est-à-dire répétée) avant l'expiration du temps mort T0. Dit autrement, il faut que la nouvelle commande, transmise avant l'expiration du temps mort T0 faisant suite à la transmission d'une commande déterminée, soit identique à ladite commande déterminée.

Par exemple, la troisième commande pour carte téléphonique présentée ci-dessus (commande dite de programmation) peut être interprétée d'une première manière en sorte de remplir la fonction précitée de programmation dans le cas où le temps mort est respecté. Et elle peut être interprétée d'une seconde manière, selon l'invention, en sorte de remplir par exemple une fonction d'effacement de la donnée mémorisée dans la mémoire de la carte à l'adresse correspondant à la valeur courant du compteur d'adresse, uniquement si cette même commande est répétée avant l'expiration du temps mort T0.

L'invention s'applique en particulier à un appareil téléphonique comportant un dispositif de lecture/écriture pour la gestion sans contact d'une carte à puce (carte téléphonique).

Dans un mode de réalisation, l'appareil est conforme aux spécifications de la norme «ISO 14443-2 type B» en ce qui concerne l'interface électromagnétique avec la carte.

Dans un tel cas notamment, la durée du temps mort T0 précité est au moins égale au temps nécessaire pour le passage du dispositif de lecture/écriture d'un mode d'émission à un mode réception.

**Revendications**

1. Procédé de gestion d'un circuit électronique dans lequel une commande déterminée transmise par une unité de gestion est interprétée par le circuit électronique d'une première manière dans le cas où (premier cas) elle est suivie d'un temps mort (T0) de durée déterminée ou d'une seconde manière, différente de la première, dans le cas où (second cas) une nouvelle commande (101) est transmise avant l'expiration de ce temps mort (T0).

2. Procédé selon la revendication 1, caractérisé en ce que ladite commande déterminée est interprétée de la seconde manière uniquement si ladite nouvelle commande est valablement reçue par le circuit électronique avant l'expiration du temps mort (T0).

3. Procédé selon la revendication 1 ou selon la revendication 2, caractérisé en ce que ladite commande déterminée est interprétée de ladite seconde manière uniquement si ladite nouvelle commande est identique à ladite commande déterminée.

4. Procédé selon la revendication 1 ou la revendication 2, caractérisé en ce que, le circuit électronique étant une mémoire de carte à puce, l'unité de gestion étant un dispositif associé de lecture/écriture, et la commande déterminée étant une commande de lecture, elle provoque dans le premier cas l'incrémentation d'un compteur d'adresse de la carte ainsi que la lecture d'une donnée mémorisée à l'adresse correspondant à la valeur courante du compteur d'adresse et sa transmission vers le dispositif, alors que, dans le second cas elle provoque uniquement l'incrémentation du compteur d'adresse.

5. Procédé selon la revendication 1 ou la revendication 2, caractérisé en ce que, le circuit électronique étant une mémoire de carte à puce, l'unité de gestion étant un dispositif associé de lecture/écriture, et la commande déterminée étant une commande d'initialisation, elle provoque dans le premier cas l'initialisation d'un compteur d'adresse de la carte ainsi que la lecture d'une donnée mémorisée à l'adresse correspondant à la valeur courante du compteur d'adresse et sa transmission vers le dispositif, alors que, dans le second cas elle provoque uniquement l'initialisation du compteur d'adresse.

6. Procédé selon la revendication 3, caractérisé en ce que, le circuit électronique étant une mémoire de carte à puce, l'unité de gestion étant un dispositif associé de lecture/écriture, et la commande déterminée étant une commande de programmation/effacement, elle provoque dans le premier cas la programmation de la cellule mémoire située à l'adresse correspondant à la valeur courant d'un compteur d'adresse de la carte, et elle provoque dans le second cas l'effacement de ladite cellule.

7. Appareil électronique comportant un dispositif de lecture/écriture pour la gestion sans contact d'une carte à puce, caractérisé en ce qu'il comporte des moyens pour mettre en oeuvre un procédé selon l'une quelconque des revendications 4 à 6.

8. Appareil selon la revendication 7, caractérisé en ce qu'il est conforme aux spécifications de la norme «ISO 14443-2 type B».

9. Appareil selon la revendication 7 ou la revendication 8, caractérisé en ce que le temps mort (T0) est au moins le temps nécessaire pour le passage du dispositif de lecture/écriture d'un mode d'émission à un mode réception.

## FIG_1

## FIG_2

| S | D0 | D1 | P |
|---|---|---|---|

## FIG_3

| S | D | ND |
|---|---|---|

## FIG_4a

## FIG_4b

## FIG_5a

## FIG_5b

7

**Office européen**

**des brevets**

**RAPPORT DE RECHERCHE EUROPEENNE**

Numéro de la demande

EP 99 40 2699

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | FR 2 758 027 A (GEMPLUS CARD INT) 3 juillet 1998 (1998-07-03) * page 12, ligne 8 - page 19, ligne 24; figure 2 * | 1,2,5 | G06K7/00 |
| A | EP 0 585 132 A (CSIR) 2 mars 1994 (1994-03-02) * page 3, ligne 46 - page 5, ligne 44; figures 1-4 * | 1 | |

DOMAINES TECHNIQUES RECHERCHES (Int.Cl.7)

G06K

Le présent rapport a été établi pour toutes les revendications

| Lieu de la recherche | Date d'achèvement de la recherche | Examinateur |
|---|---|---|
| LA HAYE | 11 janvier 2000 | Degraeve, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**                EP 99 40 2699

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-01-2000

| Document brevet cité au rapport de recherche | | Date de publication | Membre(s) de la famille de brevet(s) | | Date de publication |
|---|---|---|---|---|---|
| FR 2758027 | A | 03-07-1998 | AU | 5767798 A | 31-07-1998 |
| | | | EP | 0954824 A | 10-11-1999 |
| | | | WO | 9829826 A | 09-07-1998 |
| EP 0585132 | A | 02-03-1994 | AT | 171547 T | 15-10-1998 |
| | | | AU | 670402 B | 11-07-1996 |
| | | | AU | 1653095 A | 29-06-1995 |
| | | | AU | 656088 B | 19-01-1995 |
| | | | AU | 4494093 A | 03-03-1994 |
| | | | CA | 2104829 A | 27-02-1994 |
| | | | CN | 1088371 A | 22-06-1994 |
| | | | DE | 69321179 D | 29-10-1998 |
| | | | DE | 69321179 T | 06-05-1999 |
| | | | ES | 2121954 T | 16-12-1998 |
| | | | JP | 7311263 A | 28-11-1995 |
| | | | SG | 48262 A | 17-04-1998 |
| | | | US | 5557280 A | 17-09-1996 |
| | | | US | 5699066 A | 16-12-1997 |
| | | | ZA | 9306267 A | 14-04-1994 |

EPO FORM P0460

Pour tout renseignement concernant cette annexe : voir Journal Officiel de l'Office européen des brevets. No.12/82